# FASCICULE DE BREVET EUROPEEN

(11) **EP 2 259 993 B1**
(45) Date de publication et mention de la délivrance du brevet: **18.07.2012**
(21) Numéro de dépôt: 09729342.7
(22) Date de dépôt: 31.03.2009
(51) Int. Cl.: B67B 1/00, B65G 47/14

(54) **STRUCTURE DE GUIDAGE POUR BOUCHONS.**
FÜHRUNGSSTRUKTUR FÜR KORKEN
GUIDE STRUCTURE FOR STOPPERS

(30) Priorité: 31.03.2008 FR 0801740
(43) Date de publication de la demande: 15.12.2010
(73) Titulaire: Sidel Participations, 76930 Octeville Sur Mer (FR)
(72) Inventeur: HAMM, Caroline, F-76930 Octeville S/mer (FR); RESTORI, Paolo, F-76930 Octeville S/mer (FR); ROTH, Emmanuel, F-76930 Octeville S/mer (FR)
(74) Mandataire: Cabinet Plasseraud
(86) Numéro de dépôt international: PCT/FR2009/050541
(87) Numéro de publication internationale: WO 2009/125154

(56) Documents cités:
- FR-A- 1 270 304
- US-A- 3 086 639

## Description

La présente invention concerne une structure de guidage de bouchons et, plus particulièrement une structure qui s'intercale entre une machine d'apprêt, où les bouchons sont manipulés pour être orientés correctement, et une machine de soutirage où ils sont mis en place pour obturer des bouteilles ou des flacons.

L'acheminement des bouchons d'un poste à l'autre, entre les machines, s'effectue généralement par simple gravité mais, pour éviter les risques de coincement, les bouchons ont besoin d'être guidés avec une grande précision dans une sorte de tunnel qui est constitué de rails de guidage. Cette précision est d'autant plus difficile à tenir que les chemins empruntés par les bouchons ne sont jamais rectilignes et qu'ils sont même parfois extrêmement sinueux.

De ce fait, les structures de guidage sont étudiées et réalisées pour chaque type de bouchon et la précision qui en découle permet d'obtenir des vitesses d'acheminement très importantes, avec une grande fluidité, sans risques de coincement.

Dans le document FR 1 270 304, par exemple, les bouchons sont constitués d'une partie cylindrique et, sous cette partie cylindrique, d'une partie tronconique qui porte un gros filet de vis. Le contour de ce bouchon s'apparente à un contour de bouchon à tétine et il s'inscrit dans une structure de guidage qui comprend, d'une part, une sole qui est constituée d'un fond de tôle et, d'autre part, de deux barres rondes qui encadrent la partie tronconique du bouchon, au niveau du gros filet de vis ; le fond de tôle et les deux barres rondes délimitent le tunnel de guidage en enserrant les surfaces planes de la partie cylindrique du bouchon.

D'autres structures de ce type peuvent guider des bouchons ayant des formes complexes, avec deux parties, comme montrés, par exemple, dans les documents FR 1 174 292, US 2 797 541, EP 14 173 ; le document WO/2006/070643 montre lui aussi une structure de guidage qui se présente sous la forme d'un profilé rigide et rectiligne.

Les problèmes de guidage des bouchons sont toujours les mêmes avec, en plus, aujourd'hui, des problèmes liés à la flexibilité des installations de préparation de ces bouteilles. Les installations de soutirage ont aujourd'hui vocation à être plus polyvalentes; on leur demande d'accepter plusieurs modèles de bouchons comme, par exemple, des bouchons de bouteilles classiques, simplement cylindriques ou des bouchons plus sophistiqués, avec tétine.

Ces bouchons avec tétine présentent la particularité d'avoir deux parties avec des formes bien distinctes : un corps cylindrique qui se fixe par vissage ou autre sur le goulot de la bouteille et une tétine qui s'étend en saillie au-dessus de ce corps cylindrique. La partie cylindrique correspond à un bouchon cylindrique classique alors que la tétine forme une sorte de dôme qui s'étend en saillie au-dessus de cette partie cylindrique.

La structure de guidage décrite, notamment, dans le document FR 1 270 304, précité n'est absolument pas prévue, ni aménagée, pour guider plusieurs types de bouchons. Cette structure est exclusive du guidage de bouchons classiques cylindriques.

La présente invention propose un aménagement à ce genre de structure de guidage qui permet, sans nuire à la précision du guidage des bouchons, de donner à cette structure de guidage, un caractère véritablement polyvalent, c'est-à-dire qu'elle devient capable d'acheminer plusieurs types de bouchons : des bouchons classiques de forme cylindrique, et des bouchons qui, ayant le même type de corps cylindrique, sont surmontés d'une excroissance qui correspond à une tétine de forme plus ou moins complexe.

La structure de guidage selon l'invention se présente donc sous la forme d'un tunnel apte à emprisonner et à guider partie cylindrique du bouchon à véhiculer, qu'il s'agisse de la partie cylindrique d'un bouchon classique ou de la partie cylindrique d'un bouchon à tétine, lequel tunnel comprend, d'une part, des platines disposées transversalement par rapport au sens de défilement desdits bouchons et régulièrement réparties sur sa longueur et, d'autre part, des rails filiformes qui s'étendent depuis son entrée jusqu'à sa sortie, lesquels rails sont fixés sur le contour du passage central découpé dans les différentes platines et ils se répartissent en plusieurs groupes :
- des rails qui font office de sole pour guider la grande surface plane de la partie cylindrique des bouchons,
- des rails latéraux qui encadrent la partie cylindrique des bouchons,
- des rails de fermeture du tunnel qui coopèrent avec la surface plane annulaire dudit corps cylindrique des bouchons et qui sont espacés d'une distance correspondant au moins au diamètre de l'excroissance des bouchons du type à tétine, pour encadrer cette tétine.

Toujours selon l'invention, les rails constituant la sole et les rails latéraux ont une section circulaire.

Selon une autre disposition de l'invention, pour le cas où les bouchons du type à tétine ont, au niveau du raccordement entre le corps cylindrique et l'excroissance formant ladite tétine, une surface plane annulaire trop faible pour assurer un guidage efficace, le tunnel comporte des rails de fermeture de section polygonale dont l'arête qui constitue la surface de guidage est plane, située dans un plan parallèle à celui de la sole.

Toujours selon l'invention, les rails de fermeture sont en forme de barreaux dont la section est carrée ou rectangulaire.

Selon un mode de réalisation préférentiel, les rails de fermeture sont en forme de barreaux à section trapézoïdale et la surface plane de guidage de ces rails correspond à un aménagement en biseau sur l'un des côtés dudit barreau, lequel barreau est, par ailleurs, incliné d'un angle de l'ordre de 45° par rapport à la surface de la sole du tunnel pour éviter les retenues de salissures et faciliter le nettoyage de la structure de guidage.

Toujours selon l'invention, les rails de guidage formant la sole du tunnel sont espacés d'une distance choisie pour permettre, le cas échéant, le passage de buses pour le rinçage et/ou lavage des bouchons.

Selon une autre disposition de l'invention, les différents rails de guidage peuvent, en tout ou partie, être réalisés soit à partir de profilés métalliques, soit en matériaux thermoplastiques.

Mais l'invention sera encore détaillée à l'aide de la description suivante et des dessins annexés, donnés à titre indicatif et dans lesquels :
- la figure 1 montre un bouchon cylindrique classique, susceptible d'être guidé dans une structure de guidage selon l'invention ;
- la figure 2 est une vue de profil d'un bouchon plus complexe qui est guidé dans une structure de guidage selon l'invention, lequel bouchon est constitué d'un corps cylindrique, comme pour le bouchon de la figure 1, et il comporte, sur ce corps, une excroissance en forme de tétine avec, par exemple, un chapeau ;
- la figure 3 montre une portion d'un mode de réalisation de la structure de guidage aménagée pour accueillir et véhiculer les bouchons représentés sur les figures précédentes 1 et 2 ;
- la figure 4A est une demi-section de la structure de guidage qui est représentée figure 3, dans laquelle circule un bouchon dont le corps est cylindrique,
- la figure 4B est une demi-section aussi, représentant un bouchon avec, par exemple, une tétine sans chapeau ;
- la figure 5 est une section d'un autre mode de réalisation du tunnel avec une variante de bouchon du type à tétine à chapeau et, accompagnant cette figure, mais placés à part et au-dessus, plusieurs modèles de sections de rails constituant des variantes susceptibles de servir de rails de guidage pour la surface plane annulaire du corps cylindrique des bouchons.

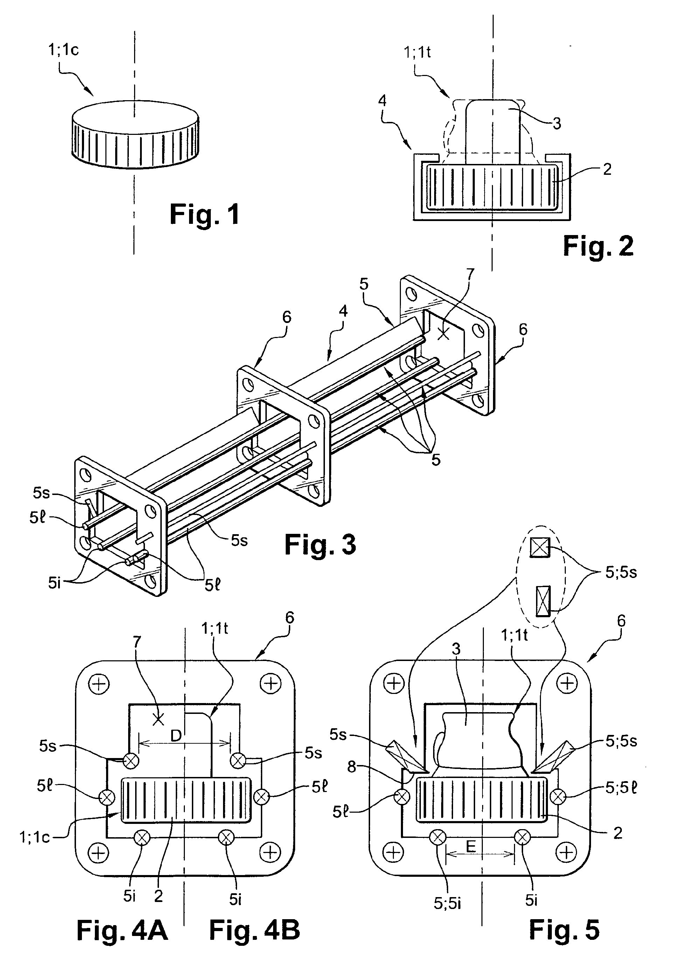

Le bouchon (1), ou capsule, représenté figure 1, correspond à un bouchon (1c) classique de bouteilles en matériau thermoplastique, par exemple. Il se présente sous la forme d'un cylindre creux, avec deux surfaces planes.

Le bouchon (1) qui est représenté figure 2 correspond à un bouchon (1t) appelé communément bouchon à tétine. Il comporte un corps (2) cylindrique dont les dimensions correspondent approximativement à celles du bouchon (1c) et ce corps (2) est surmonté d'une excroissance (3); cette excroissance (3), qui forme la tétine, peut être relativement complexe au niveau des formes et elle peut comporter, comme représenté sur la figure, un chapeau qui couvre la tétine proprement dite.

Les deux types de bouchons (1c et 1t) peuvent donc circuler dans la structure (4) de guidage en forme de tunnel, comme représentée figure 2 et qui est partiellement représentée figure 3, sous la forme d'un tronçon de tunnel.

Cette structure (4) de guidage a une section en forme de C avec des rebords en vis-à-vis qui s'étendent l'un vers l'autre et coiffent partiellement le dessus du corps cylindrique (2).

La structure (4) réalise le guidage des bouchons (1) et en particulier le guidage de leur seule partie cylindrique.

La forme et le diamètre de l'excroissance (3) constituant la tétine peuvent varier et influencer le choix des rails de guidage, comme détaillé ci-après. C'est ce choix qui permettra de sécuriser le convoyage, c'est-à-dire d'éviter les risques de coincement des bouchons.

Comme représentée figure 3, cette structure (4) de guidage forme une sorte de tunnel qui s'étend entre une machine d'apprêt, non représentée, où les bouchons sont triés et orientés, et une machine de bouchage des bouteilles, non représentée également.

Dans le mode de réalisation présenté figure 3, la structure (4) est constituée de plusieurs rails (5) filiformes et de plusieurs platines (6) régulièrement réparties sur la longueur du tunnel, sur lesquelles sont assemblés les différents rails (5). Ces platines (6) sont disposées transversalement par rapport au sens de défilement des bouchons dans le tunnel.

Les rails (5) sont répartis de façon à emprisonner la seule partie cylindrique de chaque type de bouchon, c'est-à-dire le corps (2) cylindrique. Ainsi, on trouve: - deux rails (5i) qui sont disposés de façon à former une sole pour guider la grande surface plane de la partie cylindrique des bouchons (1), - deux rails (5ℓ) qui assurent le guidage latéral dudit corps cylindrique, et - deux rails (5s) de fermeture qui assurent le guidage de l'autre surface plane dudit corps cylindrique et qui est de forme annulaire.

Les platines (6) servent à la fois de gabarit et de support pour la pose et la fixation des rails (5) et elles sont réparties régulièrement, tous les 10 à 20 cm, par exemple, pour éviter toute déformation et assurer une grande précision au niveau de la section de guidage des bouchons (1), quelle que soit la forme de ces derniers.

Les platines (6) sont, par exemple, façonnées en forme de plaque carrée, ou autre, et elles comportent une découpe (7) dans leur partie centrale dont la forme est dictée par le contour du bouchon (1t) du type à tétine.

Les rails (5) sont constitués de profilés de section circulaire ou autres. Ces profilés peuvent être métalliques et dans ce cas ils sont soudés sur les platines (6); ils peuvent également être constitués de profilés en matériau thermoplastique qui se verrouillent dans des logements appropriés aménagés sur les différentes platines (6).

La figure 4 montre un type de platine (6) avec une découpe (7) qui est adaptée à la forme et à la dimension du bouchon (1), qu'il s'agisse du bouchon (1c) simplement cylindrique, comme représenté figure 4A, ou du bouchon (1t) à tétine, comme représenté figure 4B.

Le demi bouchon (1t), représenté figure 4B, comporte un épaulement plat important autour de la tétine (3), de forme annulaire; ce modèle de bouchon (1t), avec une petite tétine, sans bouchon, par exemple, permet de réaliser un guidage du corps cylindrique avec des rails (5) qui peuvent tous être constitués de fils de section cylindrique:
- les rails (5i) qui forment la sole, - les rails (5ℓ) du guidage latéral et - les deux rails (5s) de fermeture qui constituent les rebords de la section en C de la structure (4) en forme de tunnel.

La distance D entre les deux rails (5s) est choisie en fonction du diamètre de la tétine (3). Selon le diamètre de cette tétine (3), la surface de guidage autour de ladite tétine peut se révéler insuffisante pour réaliser un guidage efficace avec des rails (5s) dont la section est circulaire.

La figure 5 montre un autre modèle de bouchon (1t), avec une excroissance (3) plus importante du fait de la présence d'un chapeau sur la tétine; cette excroissance (3) impose de réaliser un guidage de la surface plane annulaire du corps (2) cylindrique avec des rails (5s) qui comportent une surface (8) plane, laquelle surface (8) procure un contact plus important et un meilleur guidage du bouchon (1t). Cette surface plane (8) des rails (5s) est parallèle à celle de la sole qui est constituée par les rails (5i).

Sur la figure 5, les rails (5s) sont en forme de barreaux dont la section est polygonale, en forme de trapèze, avec une arête (8) taillée en biseau qui fait office de surface de guidage. Ces rails (5s) sont disposés de façon inclinée par rapport au plan de la sole qui est constituée par les rails (5i). Cette inclinaison, de l'ordre de 45° par rapport à la surface de la sole formée par les rails (5i), permet de limiter la retenue de salissures susceptibles de se déposer sur la surface plane annulaire du corps du bouchon ; cette inclinaison permet aussi de faciliter le nettoyage des rails (5s) de fermeture du tunnel et évite la stagnation des produits de nettoyage.

Le guidage sur la surface plane annulaire de la partie cylindrique des bouchons peut aussi s'effectuer au moyen de rails (5s) de section carrée ou rectangulaire, comme représentés à part, au-dessus de la figure 5. Ces rails (5s) sont positionnés de façon à mettre une de leur surface plane en position de guidage de la surface plane annulaire du corps cylindrique du bouchon.

Toujours figure 5, on remarque que les rails (5i) qui constituent la sole de guidage sont espacés d'une distance E; cette distance est choisie pour réaliser le meilleur guidage possible afin d'éviter le basculement des bouchons (1); elle est aussi choisie pour permettre le passage de busettes, non représentées, pour le lavage et/ou le rinçage des bouchons.

## Revendications

1. Structure de guidage pour bouchons avec ou sans tétine, laquelle structure est en forme de tunnel apte à emprisonner et guider la partie cylindrique desdits bouchons, lequel tunnel comprend, d'une part, des platines (6) disposées transversalement par rapport au sens de défilement desdits bouchons dans ledit tunnel et régulièrement réparties sur sa longueur, et, d'autre part, des rails (5) filiformes qui s'étendent depuis son entrée jusqu'à sa sortie, lesquels rails sont fixés sur le contour du passage central découpé dans les différentes platines (6) et ils se répartissent en plusieurs groupes :
- des rails (5i) qui font office de sole pour guider la grande surface plane de la partie cylindrique des bouchons,
- des rails (5ℓ) latéraux qui encadrent ladite partie cylindrique des bouchons,
- des rails (5s) de fermeture dudit tunnel qui coopèrent avec la surface plane annulaire dudit corps (2) cylindrique des bouchons et qui sont espacés d'une distance (D) correspondant au moins au diamètre de l'excroissance (3) des bouchons (1t) du type à tétine, pour encadrer cette tétine.

2. Structure de guidage de bouchons selon la revendication 1, **caractérisée en ce que** les rails (5) de guidage sont en forme de fils avec une section circulaire.

3. Structure de guidage de bouchons selon la revendication 1, **caractérisée en ce que**, pour le cas où les bouchons (1t) du type à tétine ont, au niveau du raccordement entre le corps (2) cylindrique et l'excroissance (3) formant ladite tétine, une surface plane annulaire trop faible pour assurer un guidage efficace, le tunnel comporte des rails (5s) de fermeture de section polygonale dont l'arête (8) qui constitue la surface de guidage est plane, située dans un plan parallèle à celui de la sole.

4. Structure de guidage de bouchons selon la revendication 3, **caractérisée en ce que** l'arête (8) qui constitue la surface de guidage, sur les rails (5s) de fermeture servant au guidage de la surface plane annulaire du corps cylindrique des bouchons (1), correspond à un côté desdits rails (5s) dont la section est carrée ou rectangulaire.

5. Structure de guidage de bouchons selon la revendication 3, **caractérisée en ce que** les rails (5s) servant au guidage de la surface plane annulaire du corps cylindrique des bouchons sont en forme de barreaux à section trapézoïdale et la surface (8) de guidage de ces rails correspond à un aménagement en biseau d'un rebord dudit barreau.

6. Structure de guidage de bouchons selon la revendication 5, **caractérisée en ce que** les rails (5s), en forme de barreau, sont inclinés, par rapport à la surface de la sole du tunnel, pour limiter la retenue de salissures et aussi de faciliter le nettoyage en évitant la stagnation des produits de nettoyage.

7. Structure de guidage de bouchons selon la revendication 6, **caractérisée en ce que** les rails (5s) sont inclinés d'un angle de l'ordre de 45° par rapport à la surface de la sole du tunnel.

8. Structure de guidage de bouchons selon la revendication 1, **caractérisée en ce que** les rails (5i) de guidage formant la sole du tunnel sont espacés d'une distance (E) qui permet le passage de buses pour le lavage des bouchons (1).

9. Structure de guidage de bouchons selon la revendication 1, caractérisée en que les rails (5) sont constitués, en tout ou partie, de profilés métalliques.

10. Structure de guidage de bouchons selon la revendication 1, caractérisée en que les rails (5) sont constitués en tout ou partie de profilés réalisés en matériau thermoplastique.

## Claims

1. A guide structure for stoppers with or without a teat, said structure being in the form of a tunnel sable to enclose and guide the cylindrical part of said stoppers, said tunnel comprising, firstly, mounting plates (6) located transversely with respect to the running direction of said stoppers in said tunnel and distributed regularly over its length, and, secondly, thread-like rails (5) which extend from its inlet as far as its outlet, said rails being fastened on the contour of the central passage cut through the various mounting plates (6) and being divided into a plurality of groups:
- rails (5i) which act as a slideway for guiding the large flat surface of the cylindrical part of the stoppers,
- lateral rails (51) which flank said cylindrical part of the stoppers,
- rails (5s) for closing said tunnel, which engage with the annular flat surface of said cylindrical body (2) of the stoppers and which are spaced apart by a distance (D) corresponding at least to the diameter of the protuberance (3) of the stoppers (1t) of the type having a teat, in order to flank this teat.

2. The guide structure for stoppers as claimed in claim 1, wherein the guide rails (5) are in the form of threads having a circular section.

3. The guide structure for stoppers as claimed in claim 1, wherein, when the stoppers (1t) of the type having a teat have, at the junction between the cylindrical body (2) and the protuberance (3) forming said teat, an annular flat surface which is too weak to guide efficiently, the tunnel comprises closing rails (5s) of polygonal section, of which the edge (8) forming the guide surface is flat and located in a plane parallel to that of the slideway.

4. The guide structure for stoppers as claimed in clam 3, wherein, on the closing rails (5s) which serve to guide the annular flat surface of the cylindrical body of the stoppers (1), the edge (8) which forms the guide surface corresponds to one side of said closing rails (5s), of which the section is square or rectangular.

5. The guide structure for stoppers as claimed in claim 3, wherein the closing rails (5s), which serve to guide the annular flat surface of the cylindrical body of the stoppers, are in the form of bars having a trapezoidal section, and the guide surface (8) of these rails corresponds to a beveled design of one edge of said bar.

6. The guide structure for stoppers as claimed in claim 5, wherein the rails (5s) in the form of bars are inclined with respect to the surface of the slideway of the tunnel in order to limit the collection of dirt and also to facilitate cleaning while avoiding the stagnation of the cleaning products.

7. The guide structure for stoppers as claimed in claim 6, wherein the closing rails (5s) are inclined at an angle of around 45° with respect to the surface of the slideway of the tunnel.

8. The guide structure for stoppers as claimed in claim 1, wherein that the guide rails (5i) forming the slideway of the tunnel are spaced apart at a distance (E) which enables nozzles for washing the stoppers (1) to pass through.

9. The guide structure for stoppers as claimed in claim 1, wherein that the rails (5) are formed, wholly or in part, of metal profiles.

10. The guide structure for stoppers as claimed in claim 1, wherein that the rails (5) are formed, wholly or in part, of thermoplastic profiles.

## Patentansprüche

1. Führungsstruktur für Korken mit oder ohne Tülle, die eine Tunnelform aufweist, geeignet um den zylindrischen Abschnitt der Korken zu umschließen und zu führen, wobei der Tunnel zum einen Platten (6) aufweist, die im Verhältnis zu dem Durchlauf der Korken durch den Tunnel querliegend angeordnet und gleichmäßig über seine Länge verteilt sind, und zum anderen drahtförmige Schienen (5), die sich von seinem Eingang bis zu seinem Ausgang erstrecken, wobei die Schienen auf dem Umriss des zentralen Durchgangs befestigt sind, der in die verschiedenen Platten (6) geschnitten ist, und sich in mehrere Gruppen aufteilen:
- Schienen (5i), die als Boden dienen, um die große plane Fläche des zylindrischen Abschnitts der Korken zu führen,
- seitliche Schienen (51), die den zylindrischen Abschnitt der Korken umgeben,
- Abschlussschienen (5s) des Tunnels, die mit der ringförmigen planen Fläche der zylindrischen Körper (2) der Korken zusammenwirken und die mit einem Abstand (D) beabstandet sind, der zumindest dem Durchmesser der Ausstülpung (3) der Korken (1t) mit Tülle entspricht, um die Tülle zu umgeben.

2. Führungsstruktur für Korken nach Anspruch 1, **dadurch gekennzeichnet, dass** die Führungsschienen (5) aus einem Draht mit kreisförmigem Querschnitt gebildet sind.

3. Führungsstruktur für Korken nach Anspruch 1, **dadurch gekennzeichnet, dass** für den Fall, bei dem die Korken (1t) mit Tülle auf der Verbindungshöhe zwischen dem zylindrischen Körper (2) und der Ausstülpung (3), die die Tülle ausbildet, eine plane ringförmige Fläche aufweisen, die für die Gewährleistung einer wirkungsvollen Führung zu schwach ist, der Tunnel Abschlussschienen (5s) mit einem vieleckigen Querschnitt aufweist, deren Kante (8), die die Führungsfläche bildet, plan ist und in einer parallelen Ebene zu der des Bodens angeordnet ist.

4. Führungsstruktur für Korken nach Anspruch 3, **dadurch gekennzeichnet, dass** die Kante (8), die die Führungsfläche ausbildet, auf den Abschlussschienen (5s), die zur Führung der planen ringförmigen Fläche der zylindrischen Körper der Korken (1) dienen, mit einer Seite der Schienen (5s) übereinstimmt, deren Querschnitt quadratisch oder rechteckig ist.

5. Führungsstruktur für Korken nach Anspruch 3, **dadurch gekennzeichnet, dass** die Schienen (5s), die zur Führung der planen ringförmigen Fläche der zylindrischen Körper der Korken dienen, Stäbe mit trapezförmigem Querschnitt sind und die Führungsfläche (8) dieser Schienen mit einer facettenförmigen Gestaltung einer Kante des Stabs übereinstimmen.

6. Führungsstruktur für Korken nach Anspruch 5, **dadurch gekennzeichnet, dass** die stabförmigen Schienen (5s) im Verhältnis zur Bodenfläche des Tunnels geneigt sind, um das Ansammeln vorn Schmutz zu begrenzern und auch die Reinigung durch Vermeidung vorn Rückständen von Reinigungsmittel zu fördern.

7. Führungsstruktur für Korken nach Anspruch 6, **dadurch gekennzeichnet, dass** die Schienen (5s) in einem Winkel von in etwa 45° im Verhältnis zur Bodenfläche des Tunnels geneigt sind.

8. Führungsstruktur für Korken nach Anspruch 1, **dadurch gekennzeichnet, dass** die Führungsschienen (5i), die den Boden des Tunnels ausbilden, mit einem Abstand (E) beabstandet sind, der den Durchgang von Düsen für das Waschen der Korken (1) zulässt.

9. Führungsstruktur für Korken nach Anspruch 1, **dadurch gekennzeichnet, dass** die Schienen (5) ganz oder teilweise aus Metallprofilen gebildet sind.

10. Führungsstruktur für Korken nach Anspruch 1, **dadurch gekennzeichnet, dass** die Schienen (5) ganz oder teilweise mit Profilen aus thermoplastischem Material gebildet sind.
